# EUROPÄISCHE PATENTSCHRIFT

(11) **EP 4 429 923 B1**
(45) Veröffentlichungstag und Bekanntmachung des Hinweises auf die Patenterteilung: **20.08.2025**
(21) Anmeldenummer: 22809063.5
(22) Anmeldetag: 24.10.2022
(51) Int. Cl.: B60W 30/14

(54) **VERFAHREN ZUR ERMITTLUNG EINER MAXIMALEN ENDGESCHWINDIGKEIT**
METHOD FOR DETERMINING A MAXIMUM END SPEED
PROCÉDÉ DE DÉTERMINATION D'UNE VITESSE FINALE MAXIMALE

(30) Priorität: 08.11.2021 DE 102021212517
(43) Veröffentlichungstag der Anmeldung: 18.09.2024
(73) Patentinhaber: Robert Bosch GmbH, 70442 Stuttgart (DE)
(72) Erfinder: OTT, Florian, 74189 Weinsberg (DE)
(86) Internationale Anmeldenummer: PCT/EP2022/079626
(87) Internationale Veröffentlichungsnummer: WO 2023/078718

(56) Entgegenhaltungen:
- DE-A1- 102007 036 794
- FR-A1- 3 096 328
- US-A1- 2013 013 164

## Beschreibung

Die vorliegende Erfindung betrifft ein Verfahren zur Ermittlung einer maximalen Endgeschwindigkeit eines Kraftfahrzeugs vor Beginn eines Geschwindigkeitsbegrenzungsbereichs. Des Weiteren betrifft die Erfindung eine Steuereinheit zum Durchführen des Verfahrens.

### Stand der Technik

In modernen Fahrzeugen werden immer häufiger automatisierte Fahrfunktionen angeboten, um den Fahrer zu entlasten, beispielsweise Autobahn- oder Parkassistenten bzw. in Zukunft auch pilotierte Funktionen. Solche Funktionen können dabei auch die Längsregelung, d.h. eine Beschleunigung beziehungsweise ein Verzögern des Fahrzeuges steuern.

Das Dokument FR 3 096 328 A1 offenbart ein Verfahren zur Ermittlung einer maximalen Endgeschwindigkeit eines Kraftfahrzeugs vor Beginn eines Geschwindigkeitsbegrenzungsbereichs mithilfe von Beschleunigungs- und Verzögerungsprofilen.

Im Dokument US 2013/013164 A1 wird ein Verfahren zur Steuerung einer maximalen Endgeschwindigkeit vor Beginn eines Geschwindigkeitsbegrenzungsbereichs in Abhängigkeit von Ampelschaltungen vorgestellt.

Das Dokument DE 10 2007 036794 A1 zeigt ein Verfahren zur grundsätzlichen Festlegung von Fahrstrategien.

Die DE 10 2009 058 393 A1 offenbart ein Verfahren zum automatischen Wechseln einer Tempomat Geschwindigkeit von einer momentanen Geschwindigkeitszone zu einer nächsten Geschwindigkeitszone. Es wird eine Stelle, an der sich die zulässige Höchstgeschwindigkeit der Zone von der momentanen zulässigen Höchstgeschwindigkeit auf die nächste zulässige Höchstgeschwindigkeit ändert, vor einem gefahrenen Fahrzeug ermittelt. Dabei wird ein Geschwindigkeitsprofil ermittelt, um die Fahrzeuggeschwindigkeit von der momentanen zulässigen Höchstgeschwindigkeit auf die nächste zulässige Höchstgeschwindigkeit zu ändern. Das Geschwindigkeitsprofil umfasst nichtlineare Änderungen der Fahrzeuggeschwindigkeit zwischen der momentanen Geschwindigkeitszone und der nächsten Geschwindigkeitszone, um abrupte Änderungen der Fahrzeuggeschwindigkeit zu beseitigen.

Das Problem ist nun wenn ein Verkehrsschild etwas weiter weg auftaucht und das Ego-Fahrzeug nicht an der maximal erlaubten Geschwindigkeit ist. Wie stark und lange das Ego-Fahrzeug beschleunigen muss um dann beispielsweise beim Verkehrsschild nicht wieder unnötig abzubremsen, aber auch nicht zu lange langsam zu fahren.

Die der Erfindung zugrunde liegende Aufgabe liegt somit darin ein Verfahren bereitzustellen, welches eine ideale Zielgeschwindigkeit ausrechnet um vor einem Bereich mit einem Geschwindigkeitsgrenzwert nicht unnötig zu Beschleunigen oder nicht unnötig langsam zu fahren.

Zur Lösung der Aufgabe wird ein Verfahren zur Ermittlung einer maximalen Endgeschwindigkeit eines Kraftfahrzeugs vor Beginn eines Geschwindigkeitsbegrenzungsbereichs mit den Merkmalen des Anspruchs 1 vorgeschlagen. Des Weiteren wird eine Steuereinheit für ein Fahrerassistenzsystem mit einer Recheneinheit zum Durchführen des Verfahrens mit den Merkmalen des Anspruchs 11 angegeben. Bevorzugte Ausführungsformen sind den abhängigen Ansprüchen zu entnehmen.

### Offenbarung der Erfindung

Die Erfindung gibt ein Verfahren zur Ermittlung einer maximalen Endgeschwindigkeit eines Kraftfahrzeugs vor Beginn eines Geschwindigkeitsbegrenzungsbereichs an. Der Geschwindigkeitsbegrenzungsbereich ist dabei ein Bereich, bei welchem eine zur maximalen Endgeschwindigkeit niedrigere Geschwindigkeit gefahren werden sollte. Diese niedrigere Geschwindigkeit, welche im Folgenden als Geschwindigkeitsgrenzwert bezeichnet wird, kann sich dabei aus Sicherheitsaspekten oder gesetzlichen Vorschriften ergeben. Die maximale Endgeschwindigkeit ist dabei eine Geschwindigkeit, auf die das Kraftfahrzeug vor dem Geschwindigkeitsbegrenzungsbereich maximal beschleunigt werden kann.

Zur Ermittlung dieser maximalen Geschwindigkeit wird zuerst eine aktuelle Kraftfahrzeuggeschwindigkeit, der Geschwindigkeitsgrenzwert eines bevorstehenden Geschwindigkeitsbegrenzungsbereichs und ein Abstand zum Beginn des Geschwindigkeitsbegrenzungsbereichs, ermittelt. Ausgehend von diesen Werten wird eine Zeit zum Geschwindigkeitsbegrenzungsbereich abgeschätzt. Es wird somit abgeschätzt, wie lange das Kraftfahrzeug ungefähr braucht, bis es am Beginn des Geschwindigkeitsbegrenzungsbereich ist. Anschließend wird eine von der Zeit zum Geschwindigkeitsbegrenzungsbereich abhängige Geschwindigkeitserhöhung zur aktuellen Kraftfahrzeuggeschwindigkeit ermittelt. Diese Geschwindigkeitserhöhung wird vorzugsweise über einen vom Kraftfahrzeug abhängigen Algorithmus berechnet. Die Geschwindigkeitserhöhung entspricht dabei einer Differenzgeschwindigkeit zwischen der aktuellen Kraftfahrzeuggeschwindigkeit und der maximalen Endgeschwindigkeit. Eine Addition der aktuelle Geschwindigkeit und der Geschwindigkeitserhöhung ergibt somit die maximale Endgeschwindigkeit.

In einem nächsten Schritt wird eine Verzögerung abgeschätzt, so dass ausgehend von der aktuellen Kraftfahrzeuggeschwindigkeit, der Geschwindigkeitserhöhung und dem Abstand zum Beginn des Geschwindigkeitsbegrenzungsbereichs, beim Beginn des Geschwindigkeitsbegrenzungsbereichs der Geschwindigkeitsgrenzwert vorliegt. Die ermittelte Geschwindigkeitserhöhung wird dabei reduziert, falls die abgeschätzte Verzögerung oberhalb eines Verzögerungsgrenzwertes liegt. Der Verzögerungsgrenzwert kann dabei vorgegeben sein oder in bestimmten Grenzen von dem Fahrer variiert werden. Ebenso ist es möglich, den Verzögerungsgrenzwert in Abhängigkeit der Straßenbedingungen, wie beispielsweise Schnee oder Regen, zu verringern.

Dieses Verfahren hat dabei den Vorteil, dass dieses mittels einfacher Berechnungen durchführbar ist, so dass die Rechenleistung für die Durchführung des Verfahrens reduziert wird. Zusätzlich wird ein unnötiges Bremsen und Beschleunigen vermieden. Dadurch kann Treibstoff eingespart werden. Zudem wird die Sicherheit erhöht, da die Verzögerung innerhalb eines vorgegebenen Bereichs gehalten wird. Durch Verwendung dieses Verfahrens im Rahmen eines Fahrerassistenzsystems wird zudem der Fahrkomfort für den Fahrer erhöht.

In einer bevorzugten Ausführung der Erfindung wird die Geschwindigkeitserhöhung aus einem Kennfeld ausgelesen. In diesem Kennfeld kann beispielsweise zu der Zeit zum Geschwindigkeitsbegrenzungsbereich ein Wert für eine Geschwindigkeitserhöhung hinterlegt sein. Ein solches Kennfeld kann beispielweise werksseitig hinterlegt sein. Durch die Verwendung eines solchen Kennfeldes wird die Ermittlung der Geschwindigkeitserhöhung wesentlich vereinfacht. Das Verfahren ist dadurch schneller und einfacher durchführbar. Darüber hinaus kann die Rechenkapazität nochmals wesentlich reduziert werden.

In einer weiteren bevorzugten Ausführung der Erfindung wird die Reduzierung der ermittelten Geschwindigkeitserhöhung anhand eines Kennfeldes zur abgeschätzten Verzögerung berechnet. In einem solchen Kennfeld kann zu der ermittelten Verzögerung ein Geschwindigkeitsreduktionswert hinterlegt sein. Ebenso kann in dem Kennfeld ein Faktor zwischen Null und Eins hinterlegt sein. Die Geschwindigkeitserhöhung wird dabei mit diesem Faktor multipliziert um eine resultierende Geschwindigkeitserhöhung zu ermitteln. Dadurch kann eine resultierende Geschwindigkeitserhöhung schnell und einfach ermittelt werden. Durch Verwendung eines Kennfeldes werden auch hierzu die Berechnungen wesentlich vereinfacht.

Vorzugsweise werden die Kennfelder entsprechend eines ausgewählten Fahrmodus des Kraftfahrzeugs gewählt. Der Fahrer kann dabei zwischen verschiedenen Fahrmodi, wie beispielsweise einem Sport-Modus oder einem Spritspar-Modus wählen. Entsprechend wird ein entsprechendes für die Durchführung des Verfahrens hinterlegtes Kennfeld verwendet. Im Gegensatz zu einem Sport-Modus ist bei einem Spritspar-Modus die Geschwindigkeitserhöhung und dementsprechend die Verzögerung geringer. Das Verfahren kann dadurch an die Wünsche des Fahrers anpassen, so dass der Fahrkomfort wesentlich verbessert wird.

In einer vorteilhaften Weiterbildung wird zum Abschätzen der Verzögerung von einer konstanten Verzögerung ausgegangen. Es wird somit davon ausgegangen, dass das Kraftfahrzeug, ausgehend von der maximalen Endgeschwindigkeit, mit einem gleichbleibenden Verzögerungswert verzögert. Durch die Verwendung einer konstanten Verzögerung wird, obwohl normalerweise keine konstante Verzögerung durchgeführt wird, eine Abschätzung der Verzögerung vereinfacht. Der Rechenaufwand wird dadurch nochmals wesentlich reduziert.

Alternativ wird für die Verzögerung eine vorgegebene Verzögerungsfunktion verwendet. Diese Verzögerungsfunktionen sind an reale Verzögerungen angelehnt. Durch die Verwendung solcher Verzögerungsfunktionen lässt sich die Verzögerung wesentlich genauer bestimmen. Zudem kann ein maximal auftretender Verzögerungswert besser vorhergesagt werden.

Bei einer weiteren vorteilhaften Ausführung wird der Abstand zum Beginn des Geschwindigkeitsbegrenzungsbereichs anhand von Kartendaten und/oder Sensordaten und/oder Clouddaten ermittelt. Aufgrund der aktuellen Position, welche beispielweise über GPS ermittelt wird, kann innerhalb der Karte der Abstand zum Beginn des Geschwindigkeitsbegrenzungsbereichs ermittelt werden. Ebenso kann der Abstand zum Geschwindigkeitsbegrenzungsbereichs über einen beispielsweise Radarsensor ermittelt werden. Ein solcher Sensor ist in vielen Autos bereits für andere Assistenzsysteme verbaut, so dass kein zusätzlicher Sensor notwendig ist. Zusätzlich dazu oder alternativ kann der Abstand auch aufgrund der GPS Daten aus einer Cloud ermittelt werden. Aufgrund dieser Möglichkeiten, lässt sich ein Abstand zu einem Geschwindigkeitsbegrenzungsbereich auf einfache und wirtschaftliche Weise ermitteln.

Gemäß einer zweckmäßigen Ausführung wird der Geschwindigkeitsgrenzwert anhand von gesetzlich vorgegebenen Grenzwerten und/oder streckenbedingten Grenzwerten ermittelt wird. Ein gesetzlich vorgegebener Grenzwert ist dabei beispielsweise eine Geschwindigkeitsbeschränkung oder eine sonstige für einen bestimmten Bereich vorgegebene Geschwindigkeit. Diese Geschwindigkeitsbeschränkung kann dabei beispielweise über Schilder angezeigt sein. Ebenso kann der Grenzwerte beispielsweise durch eine Kurve, eine Auffahrt oder durch den Straßenzustand gegeben sein.

Gemäß einer weiteren zweckmäßigen Ausführung wird der Geschwindigkeitsgrenzwert anhand von Kartendaten und/oder Kameradaten und/oder Clouddaten ermittelt. Der Geschwindigkeitsgrenzwert kann dabei anhand von in der Karte hinterlegten Werten ermittelt werden. Ebenso kann ein Geschwindigkeitsgrenzwert aufgrund einer in der Karte erkannten Streckenführung, wie beispielsweise einer Kurve, ermittelt werden. Dabei kann der Kurvenradius oder ein maximaler Kurvenradius einer Kurve in der Karte bestimmt werden. Aufgrund dieses Kurvenradius wird anschließend der Geschwindigkeitsgrenzwert bestimmt. Dadurch kann sichergestellt werden, dass nicht unnötig in der Kurve gebremst werden muss, wodurch die Sicherheit erhöht wird. Die Geschwindigkeitsgrenzwerte der gesetzlichen und ebenso streckenbedingten Grenzwerte können ebenso von einer Cloud abgerufen werden. Dadurch kann die Rechenleistung eines solchen System verringert werden.

Vorteilhafterweise wird das Kraftfahrzeug nach der Ermittlung der maximalen Endgeschwindigkeit von der aktuellen Geschwindigkeit auf diese Geschwindigkeit beschleunigt und anschließend bis zum Beginn des Geschwindigkeitsbegrenzungsbereichs auf den Geschwindigkeitsgrenzwert verzögert. Durch diese im Rahmen eines Fahrerassistenzsystems bereitgestellten Schritte wird dem Fahrer Arbeit abgenommen, so dass der Fahrkomfort erhöht wird.

Die Aufgabe der vorliegenden Erfindung wird zusätzlich gelöst durch eine Steuereinheit für ein Fahrerassistenzsystem zur Steuerung einer Längsregelung eines Kraftfahrzeug, mit einer Recheneinheit zum Durchführen des erfindungsgemäßen Verfahrens. Eine solche Steuereinheit kann dadurch in ein Kraftfahrzeug integriert sein, so dass die für das Verfahren beschriebenen Vorteile erzielbar sind.

Das zuvor beschriebene Verfahren kann insbesondere beispielsweise computerimplementiert und somit in einer Software verkörpert sein. Die Erfindung bezieht sich daher auch auf ein Computerprogramm mit maschinenlesbaren Anweisungen, die, wenn sie auf einem oder mehreren Computern ausgeführt werden, den oder die Computer dazu veranlassen, das beschriebene Verfahren auszuführen. In diesem Sinne sind auch Steuergeräte für Fahrzeuge und Embedded-Systeme für technische Geräte, die ebenfalls in der Lage sind, maschinenlesbare Anweisungen auszuführen, als Computer anzusehen.

Ebenso bezieht sich die Erfindung auch auf einen maschinenlesbaren Datenträger und/oder auf ein Downloadprodukt mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

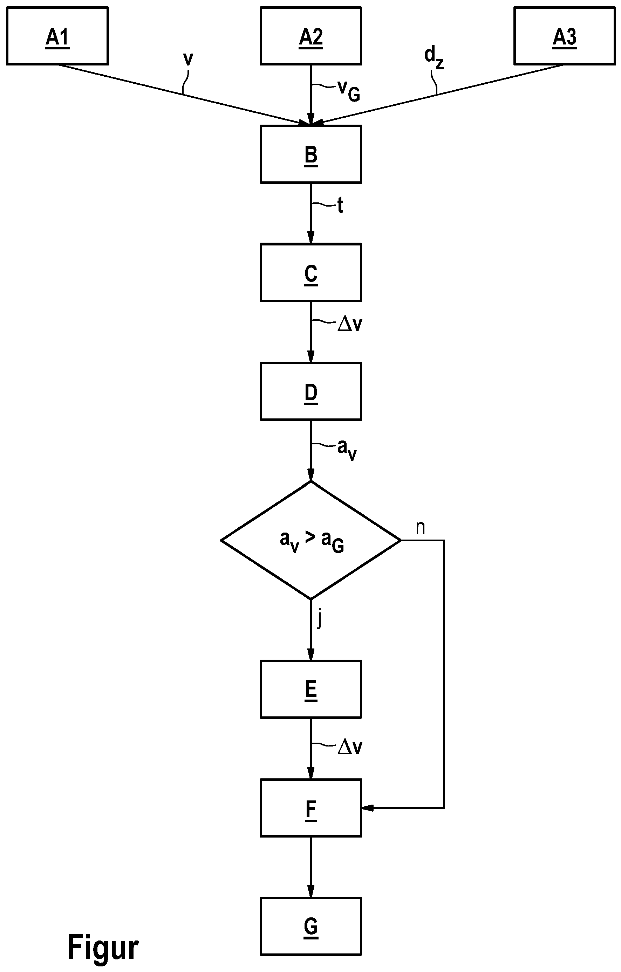

Ausführungsbeispiele der Erfindung sind in der Zeichnung dargestellt und in der nachfolgenden Beschreibung näher erläutert. Es zeigt:
- Figur: Ausführungsbeispiel eines erfindungsgemäßen Verfahrens.

In der Figur ist ein Ausführungsbeispiel eines erfindungsgemäßen Verfahrens gezeigt. Dieses Verfahren dient zur Ermittlung einer maximalen Endgeschwindigkeit vₘₐₓ eines Kraftfahrzeugs, vor Beginn eines Geschwindigkeitsbegrenzungsbereich. In einem ersten Schritt A1 wird zuerst die die aktuelle Kraftfahrzeuggeschwindigkeit v ermittelt. Diese Geschwindigkeit v wird dabei beispielweise direkt aus den aktuellen Werten des Kraftfahrzeugs ermittelt. Ebenso kann die Geschwindigkeit v über die Werte des GPS Systems bestimmt werden.

In dem ersten Schritt A2 wird ebenso ein Geschwindigkeitsgrenzwert v_{G} eines bevorstehenden Geschwindigkeitsbegrenzungsbereichs ermittelt. Der Geschwindigkeitsgrenzwert v_{G} kann dabei anhand von gesetzlichen Werten bestimmt werden. Ebenso kann der Geschwindigkeitsgrenzwert v_{G} über ein mit einer Kamera des Kraftfahrzeugs erkanntes Geschwindigkeitsbegrenzungsschild ermittelt werden. Der Geschwindigkeitsgrenzwert v_{G} kann auch über in einer Karte eingetragene Geschwindigkeitsgrenzwerte v_{G} ermittelte werden. Zusätzlich kann aus der Karte anhand des beispielsweise Kurvenradius ein Geschwindigkeitsgrenzwert v_{G} ermittelt werden.

In dem ersten Schritt A3 wird zusätzlich ein Abstand d_{Z} zum Beginn des Geschwindigkeitsbegrenzungsbereichs ermittelt. Der Abstand d_{Z} kann ebenso wie der Geschwindigkeitsgrenzwert v_{G} aus Kartendaten bestimmt werden. Alternativ oder zusätzlich kann dieser Abstand d_{Z} über Sensoren des Kraftfahrzeugs, wie beispielsweise einem Radarsensor ermittelt werden.

Ausgehend von der aktuellen Kraftfahrzeuggeschwindigkeit v, dem Geschwindigkeitsgrenzwerts v_{G} und dem Abstand d_{Z} zum Beginn des Geschwindigkeitsbegrenzungsbereichs, wird in einem nächsten Schritt B eine Zeit t bis zum Beginn des Geschwindigkeitsbegrenzungsbereich abgeschätzt. Die Zeit t kann dabei beispielsweise anhand der Formel t=d_{Z}/((v_{G}+v)/2) berechnet werden. Da die Zeit t ausgehend von der aktuelle Geschwindigkeit v berechnet wird, handelt es sich hierbei lediglich um eine Schätzung.

In einem nächsten Schritt C wird anhand der Zeit t eine Geschwindigkeitserhöhung Δv bestimmt. Dazu wird anhand eines beispielsweise Kennfeldes zu der Zeit t eine Geschwindigkeitserhöhung Δv ermittelt. Anschließend in Schritt D wird ausgehend von dieser Geschwindigkeitserhöhung Δv eine notwendige Verzögerung a_{V} abgeschätzt, so dass zum Beginn des Geschwindigkeitsbegrenzungsbereichs der Geschwindigkeitsgrenzwert v_{G} vorliegt. Zum Abschätzen der Verzögerung a_{V} kann eine konstante Verzögerung angenommen werden, so dass sich die Verzögerung a_{V} nach folgender Formel ergibt: a_{V}=(v_{G}²-v²)/(2*d_{Z}). Alternativ kann die Verzögerung a_{V} auch anhand eines Kennfeldes ermittelt werden.

Anhand der somit ermittelten Verzögerung a_{V} wird diese mit einem Verzögerungsgrenzwert a_{G} verglichen. Dieser Verzögerungsgrenzwert a_{G} gibt dabei eine maximale Verzögerung wieder, welche beispielsweise aufgrund des Fahrkomforts, den technischen Voraussetzungen des Kraftfahrzeuges oder dem Straßenzustand bestimmt worden ist. Falls die ermittelte Verzögerung a_{V} größer als der Verzögerungsgrenzwert a_{G} sein sollte, wird in einem nächsten Schritt E die ermittelte Geschwindigkeitserhöhung Δv reduziert. Die Höhe der Reduktion kann beispielsweise aus einem Kennfeld ermittelt werden.

Nachdem die Geschwindigkeitserhöhung Δv reduziert wurde, beziehungsweise falls die Verzögerung a_{V} den Verzögerungsgrenzwert a_{G} nicht übersteigt, wird das Kraftfahrzeug in einem nächsten Schritt F auf die sich aus der Kraftfahrzeuggeschwindigkeit v und der Geschwindigkeitserhöhung Δv ergebenden Endgeschwindigkeit vₘₐₓ beschleunigt. In einem sich daran anschließenden Schritt G, wird das Kraftfahrzeug dann bis zum Beginn des Geschwindigkeitsbegrenzungsbereichs auf den Geschwindigkeitsgrenzwert v_{G} verzögert.

## Patentansprüche

1. Verfahren zur Ermittlung einer maximalen Endgeschwindigkeit (vₘₐₓ) eines Kraftfahrzeugs vor Beginn eines Geschwindigkeitsbegrenzungsbereichs, umfassend die Schritte:
- Ermitteln (A1, A2, A3) einer aktuellen Kraftfahrzeuggeschwindigkeit (v), einen Geschwindigkeitsgrenzwert (v_{G}) eines bevorstehenden Geschwindigkeitsbegrenzungsbereichs und einem Abstand (d_{z}) zum Beginn des Geschwindigkeitsbegrenzungsbereichs,
- Abschätzen (B) einer Zeit (t) zum Geschwindigkeitsbegrenzungsbereich ausgehend von den zuvor ermittelten Werten (v, v_{G}, d_{z}),
- Bestimmen (C) einer Geschwindigkeitserhöhung (Δv) zur aktuellen Kraftfahrzeuggeschwindigkeit (v),
- Abschätzen (D) einer Verzögerung (a_{V}), so dass ausgehend von der aktuellen Kraftfahrzeuggeschwindigkeit (v), der Geschwindigkeitserhöhung (Δv) und dem Abstand (d_{z}) zum Beginn des Geschwindigkeitsbegrenzungsbereichs, beim Beginn des Geschwindigkeitsbegrenzungsbereichs der Geschwindigkeitsgrenzwert (v_{G}) vorliegt, und
- Reduzieren (E) der ermittelten Geschwindigkeitserhöhung (Δv),
**dadurch gekennzeichnet, dass**
- die Geschwindigkeitserhöhung (Δv) zur aktuellen Kraftfahrzeuggeschwindigkeit (v) von der Zeit (t) zum Geschwindigkeitsbegrenzungsbereich abhängt
- die ermittelte Geschwindigkeitserhöhung (Δv) reduziert wird, falls die abgeschätzte Verzögerung (a_{V}) oberhalb eines Verzögerungsgrenzwertes (a_{G}) liegt.

2. Verfahren nach Anspruch 1, **dadurch gekennzeichnet, dass** die Geschwindigkeitserhöhung (Δv) aus einem Kennfeld ausgelesen wird.

3. Verfahren nach Anspruch 1 oder 2, **dadurch gekennzeichnet, dass** die Reduzierung der ermittelten Geschwindigkeitserhöhung (Δv) anhand eines Kennfeldes zur abgeschätzten Verzögerung (a_{V}) berechnet wird.

4. Verfahren nach Anspruch 2 oder 3, **dadurch gekennzeichnet, dass** die Kennfelder entsprechend eines ausgewählten Fahrmodus des Kraftfahrzeugs gewählt werden.

5. Verfahren nach einem der vorherigen Ansprüche, **dadurch gekennzeichnet, dass** zum Abschätzen der Verzögerung (a_{V}) von einer konstanten Verzögerung ausgegangen wird.

6. Verfahren nach einem der Ansprüche 1 bis 4 **dadurch gekennzeichnet, dass** für die Verzögerung (a_{V}) eine vorgegebene Verzögerungsfunktion verwendet wird.

7. Verfahren nach einem der vorherigen Ansprüche, **dadurch gekennzeichnet, dass** der Abstand (d_{Z}) zum Beginn des Geschwindigkeitsbegrenzungsbereichs anhand von Kartendaten und/oder Sensordaten und/oder Clouddaten ermittelt wird.

8. Verfahren nach einem der vorherigen Ansprüche, **dadurch gekennzeichnet, dass** der Geschwindigkeitsgrenzwert (v_{G}) anhand von gesetzlich vorgegebenen Grenzwerten und/oder streckenbedingten Grenzwerten ermittelt wird.

9. Verfahren nach Anspruch 8, **dadurch gekennzeichnet, dass** der Geschwindigkeitsgrenzwert (v_{G}) anhand von Kartendaten und/oder Kameradaten und/oder Clouddaten ermittelt wird.

10. Verfahren nach einem der vorherigen Ansprüche, **dadurch gekennzeichnet, dass** das Kraftfahrzeug nach der Ermittlung der maximalen Endgeschwindigkeit (vₘₐₓ) von der aktuellen Geschwindigkeit (v) auf diese Geschwindigkeit beschleunigt (F) und anschließend bis zum Beginn des Geschwindigkeitsbegrenzungsbereichs auf den Geschwindigkeitsgrenzwert (v_{G}) verzögert (G) wird.

11. Steuereinheit für ein Fahrerassistenzsystem zur Steuerung einer Längsregelung eines Kraftfahrzeug, mit einer Recheneinheit zum Durchführen des Verfahrens nach einem der vorherigen Ansprüche.

12. Computer-Programmprodukt mit Programmcodemitteln zur Durchführung des Verfahrens nach einem der Ansprüche 1 bis 10, wenn das Computer-Programmprodukt auf einer Steuereinheit nach Anspruch 11 ausgeführt wird.

13. Maschinenlesbarer Datenträger und/oder Downloadprodukt, auf dem Computer-Programmprodukt nach Anspruch 12 gespeichert ist.

## Claims

1. Method for determining a maximum final speed (vₘₐₓ) of a motor vehicle before the start of a speed limit area, comprising the steps of:
- determining (A1, A2, A3) a current motor vehicle speed (v), a speed limit value (v_{G}) of an imminent speed limit area and a distance (d_{z}) from the start of the speed limit area,
- estimating (B) a time (t) to the speed limit area on the basis of the previously determined values (v, v_{G},d_{z}),
- determining (C) a speed increase (Δv) with respect to the current motor vehicle speed (v),
- estimating (D) a deceleration (a_{V}) such that, on the basis of the current motor vehicle speed (v), the speed increase (Δv) and the distance (d_{z}) from the start of the speed limit area, the speed limit value (v_{G}) is present at the start of the speed limit area, and
- reducing (E) the determined speed increase (Δ_{V}),
**characterized in that**
- the speed increase (Δv) with respect to the current motor vehicle speed (v) depends on the time (t) to the speed limit area,
- the determined speed increase (Δv) is reduced if the estimated deceleration (a_{V}) is above a deceleration limit value (a_{G}).

2. Method according to Claim 1, **characterized in that** the speed increase (Δv) is read out from a characteristic map.

3. Method according to Claim 1 or 2, **characterized in that** the reduction in the determined speed increase (Δv) is calculated on the basis of a characteristic map for the estimated deceleration (a_{V}).

4. Method according to Claim 2 or 3, **characterized in that** the characteristic maps are selected in accordance with a selected driving mode of the motor vehicle.

5. Method according to one of the preceding claims, **characterized in that** a constant deceleration is assumed for estimating the deceleration (a_{V}).

6. Method according to one of Claims 1 to 4, **characterized in that** a predefined deceleration function is used for the deceleration (a_{V}).

7. Method according to one of the preceding claims, **characterized in that** the distance (d_{z}) from the start of the speed limit area is determined on the basis of map data and/or sensor data and/or cloud data.

8. Method according to one of the preceding claims, **characterized in that** the speed limit value (v_{G}) is determined on the basis of legally predefined limit values and/or route-related limit values.

9. Method according to Claim 8, **characterized in that** the speed limit value (v_{G}) is determined on the basis of map data and/or camera data and/or cloud data.

10. Method according to one of the preceding claims, **characterized in that**, after the maximum final speed (vₘₐₓ) has been determined, the motor vehicle is accelerated (F) from the current speed (v) to this speed and is then decelerated (G) to the speed limit value (v_{G}) until the start of the speed limit area.

11. Control unit for a driver assistance system for controlling longitudinal control of a motor vehicle, having a computing unit for carrying out the method according to one of the preceding claims.

12. Computer program product comprising program code means for carrying out the method according to one of Claims 1 to 10 when the computer program product is executed on a control unit according to Claim 11.

13. Machine-readable data carrier and/or download product, on which the computer program product according to Claim 12 is stored.

## Revendications

1. Procédé de détermination de la vitesse finale maximale (vₘₐₓ) d'un véhicule à moteur avant le début d'une zone de limitation de vitesse, comprenant les étapes suivantes :
- la détection (A1, A2, A3) d'une vitesse actuelle du véhicule à moteur (v), d'une limite de vitesse (v_{G}) d'une zone de limitation de vitesse imminente et d'une distance (d_{z}) par rapport au début de la zone de limitation de vitesse,
- l'estimation (B) d'un temps (t) jusqu'à la zone de limitation de vitesse à partir des valeurs précédemment déterminées (v, v_{G}, d_{z}),
- la détermination (C) d'une augmentation de vitesse (Δv) par rapport à la vitesse actuelle du véhicule à moteur (v),
- l'estimation (D) d'une décélération (a_{V}), de sorte que, à partir de la vitesse actuelle du véhicule à moteur (v), de l'augmentation de vitesse (Δv) et de la distance (d_{z}) par rapport au début de la zone de limitation de vitesse, la limite de vitesse (v_{G}) soit présente au début de la zone de limitation de vitesse, et
- la réduction (E) de l'augmentation de vitesse (Δv) déterminée,
**caractérisé en ce que**
- l'augmentation de vitesse (Δv) par rapport à la vitesse actuelle du véhicule (v) dépend du temps (t) jusqu'à la zone de limitation de vitesse
- l'augmentation de vitesse déterminée (Δv) est réduite si le retard estimé (a_{V}) est supérieur à une limite de retard (a_{G}).

2. Procédé selon la revendication 1, **caractérisé en ce que** l'augmentation de vitesse (Δv) est lue à partir d'un champ caractéristique.

3. Procédé selon la revendication 1 ou 2, **caractérisé en ce que** la réduction de l'augmentation de vitesse déterminée (Δv) est calculée sur la base d'un champ caractéristique de décélération estimée (a_{V}).

4. Procédé selon la revendication 2 ou 3, **caractérisé en ce que** les champs caractéristiques sont sélectionnés en fonction du mode de conduite sélectionné du véhicule à moteur.

5. Procédé selon l'une des revendications précédentes, **caractérisée en ce qu'**une décélération constante est supposée pour estimer la décélération (a_{V}).

6. Procédé selon l'une des revendications 1 à 4, **caractérisé en ce qu'**une fonction de décélération prédéterminée est utilisée pour la décélération (a_{V}).

7. Procédé selon l'une des revendications précédentes, **caractérisé en ce que** la distance (d_{z}) par rapport au début de la zone de limitation de vitesse est déterminée à l'aide de données cartographiques et/ou de données de capteur et/ou de données en nuage.

8. Procédé selon l'une des revendications précédentes, **caractérisé en ce que** la valeur limite de vitesse (v_{G}) est déterminée à l'aide de valeurs limites fixées par la loi et/ou de valeurs limites liées à l'itinéraire.

9. Procédé selon la revendication 8, **caractérisé en ce que** la valeur limite de vitesse (v_{G}) est déterminée à partir de données cartographiques et/ou de données de caméra et/ou de données en nuage.

10. Procédé selon l'une des revendications précédentes, **caractérisée en ce qu'**après avoir déterminé la vitesse finale maximale (vₘₐₓ), le véhicule est accéléré (F) de la vitesse actuelle (v) à cette vitesse, puis décéléré (G) jusqu'au début de la zone de limitation de vitesse à la limite de vitesse (v_{G}).

11. Unité de commande d'un système d'assistance à la conduite pour la commande d'une régulation longitudinale d'un véhicule à moteur, comprenant une unité de calcul destinée à mettre en œuvre le procédé selon l'une des revendications précédentes.

12. Programme informatique, comprenant un code de programme destiné à mettre en œuvre le procédé selon l'une des revendications 1 à 10 lorsque le programme informatique est exécuté sur un dispositif selon la revendication 11.

13. Support de données lisible par machine et/ou produit de téléchargement sur lequel est stocké le produit de programme informatique selon la revendication 12.
